# EUROPEAN PATENT APPLICATION

(11) **EP 4 838 379 A1**
(43) Date of publication of application: **11.11.2026**
(21) Application number: 25212530.7
(22) Date of filing: 30.10.2025
(51) Int. Cl.: G06F 16/3349, G06F 16/9032

(54) **TEXT INPUT TO PROXY PHRASE CONVERSION**

(30) Priority: 05.05.2025 US 202563800188 P
(71) Applicant: GOOGLE LLC, Mountain View CA 94043 (US)
(72) Inventor: MEYERSON, Adam William, 8002 Zürich (CH); WAGNER, Florian Stefan, 8002 Zürich (CH); CHAI, Hongjie, Mountain View, 94043 (US); VULEJ, Walter Alejandro, Mountain View, 94043 (US); LI, Jinyuan, Mountain View, 94043 (US)
(74) Representative: Marks & Clerk GST

(57) **Abstract**

Methods, systems, and apparatus, including computer programs encoded on a computer storage medium, for generating an intent lexicon that can be used to convert textual input. A public query is obtained and used to obtain search results. The public query is converted to a proxy phrase based on the public query, the search results, a language, and a rewrite prompt input to the language model. A mapping between the public query and the proxy phrase is generated and stored in an intent lexicon. An input query is received from a client device. A determination is made that the input query matches a given public query stored in the intent lexicon. A corresponding proxy phrase that is mapped to the given public query is selected as a representation of the input query. The corresponding proxy phrase is transmitted to a third-party system as a representation of the input query.

## Description

### BACKGROUND

This specification relates to data processing, artificial intelligence, and the creation of an intent lexicon to which text input can be mapped and used to perform text input to proxy phrase conversions.

Advances in machine learning are enabling artificial intelligence to be implemented in more applications. For example, large language models have been implemented to allow for a conversational interaction with computers using natural language rather than a restricted set of prompts. This allows for a more natural interaction with the computer, and increased flexibility in how various tasks are completed.

### SUMMARY

This application is related to converting text input submitted by a user into a proxy phrase that represents the text input while protecting user data. The techniques described herein facilitate privacy-preserving query analysis and content customization. As discussed in more detail throughout this document, the system obtains public queries that have been received from multiple users and meet specific privacy criteria. It then uses a language model to convert these public queries into proxy phrases, taking into account the original query, associated search results, query language, and a rewrite prompt.

The system stores mappings between public queries and their corresponding proxy phrases in an intent lexicon. When receiving an input query from a client device, the system determines if it matches a public query in the lexicon. If a match is found, the corresponding proxy phrase is selected as a representation of the input query and transmitted to one or more third-party systems, such that the proxy phrase can be used for further processing, such as data analysis and/or content modification, by the third-party systems. This approach allows third-party systems to gain insights into search trends and optimize various functions while maintaining user privacy and adhering to data protection regulations. Overall, this system aims to strike a balance between providing valuable query insights to third-party systems and preserving user privacy in the context of online activities and analysis.

The system provides various advantages over existing systems. For example, because the system uses proxy phrases that were generated using public queries rather than a user submitted query, the system breaks the connection between the user submitted query and the data used to perform processing and/or analytics. In this way, user data is protected because the details of the user submitted query that are not included in the proxy phrase (which has been deemed privacy safe) are not revealed or otherwise accessible to third-party systems.

Additionally, the use of proxy phrases instead of user submitted queries enables broader coverage of more user submitted queries without sacrificing granularity in analysis. As user submitted queries become more diverse and unique, a larger proportion may fall under specified privacy thresholds, leading to increased data aggregation in search terms reports. For example, privacy constraints often necessitate the anonymization or aggregation of certain user submitted queries (e.g., search queries), particularly those that do not meet specific thresholds for user volume. This aggregation can limit the granularity and transparency of data available for analysis and/or content personalization, potentially impacting the ability to efficiently evaluate user submitted queries and/or distribute content over the Internet. The solutions discussed herein, which are related to the generation and use of proxy phrases in place of user submitted queries, overcomes the problem of data scarcity and/or overgeneralization because the proxy queries can be used to represent user submitted queries that would otherwise not be available for processing, analysis, or personalization, such that the data upon which further processing is performed is representative of a larger portion of all queries without sacrificing granularity.

Conventional systems may attempt to solve these problems using human generated distribution keywords that are supplied by content creators/distributors. However, often times, these sets of distribution keywords overlap in subject matter significantly, such that each individual distribution keyword may not have enough traffic to qualify for individual use (e.g., they don't satisfy user data protection requirements). As such, the information related to these distribution keywords are grouped together under a general bucket of "other distribution keywords." This results in a loss of data fidelity. The present solution solves this problem because the models used to generate the proxy phrases, which are used to represent the user submitted queries, express concepts in a concise and common way, such that different user submitted queries (even rare queries) that are all related to the same core item/concept/user intent, are all represented by the same proxy phrase, which allows for those different user submitted queries to be properly processed and/or considered, rather than being lumped together in an "other distribution keywords" bucket, which prevents the processing/use of the different user submitted queries. Thus, the use of the proxy phrases enables a granular representation of any received query to be used/processed without negating the data protections that are in place to prevent the sharing of rarely received search queries.

Another advantage of the claimed subject matter is the ability to improve the coverage of queries that can be processed by the system in real-time (e.g., at the time the query is received) without the risk of hallucinations by the language model and without incurring the latency introduced by the language model when processing a received query. For example, by using the language model to pre-construct an intent lexicon containing the proxy phrases, a received query can be matched to an existing proxy phrase in the intent lexicon (e.g., by way of a search/lookup process), rather than having to use the language model to generate a proxy phrase in the window of time allowed between receipt of the search query and transmission of content responsive to the search query (which is smaller than the time typically required to generate new content using the language model). Furthermore, the pre-construction of the intent lexicon ensures that language model errors (e.g., hallucinations) are avoided because the proxy phrases that are stored in the intent lexicon can be processed/examined to ensure that they are reflective of the intent of the phrase input to the language model. As such, the pre-constructed intent lexicon can be ensured to only include phrases that are representative of the phrase used by the language model to create the proxy phrases, the latency of using the language model does not affect the ability of the system to respond to a real-time search query within a required amount of time, and virtually any received search query can be matched to one of the proxy phrases in the intent lexicon, thereby improving the coverage of search queries the system can service without violating user data protection requirements associated with infrequently received search queries.

In general, one innovative aspect of the subject matter described in this specification can be embodied in methods that include the actions of obtaining, by one or more computing devices, a public query that has been received from multiple different users; obtaining, by the one or more computing devices, search results for the public query; converting, by the one or more computing devices and using a language model, the public query to a proxy phrase based on the public query, the search results, a language, and a rewrite prompt that are input to the language model; generating and storing, by the one or more computing devices, a mapping between the public query and the proxy phrase in an intent lexicon with other mappings between other public queries and other proxy phrases that were generated by the language model; receiving, by the one or more computing devices and from a client device, an input query; determining, by the one or more computing devices, that the input query matches a given public query stored in the intent lexicon; selecting, by the one or more computing devices, a corresponding proxy phrase that is mapped to the given public query as a representation of the input query based on the determination that the input query matches the given public query; and transmitting, by the one or more computing devices, the corresponding proxy phrase to a third-party system as a representation of the input query. Other embodiments of this aspect include corresponding systems, apparatus, and computer programs, configured to perform the actions of the methods, encoded on computer storage devices.

These and other embodiments can each optionally include one or more of the following features. Methods can include identifying a user query; determining that the user query has been received from at least a first pre-specified number of different users from at least a second pre-specified number of different geographic regions; determining that the user query complies with a set of privacy constraints; and classifying the user query as the public query based on (i) the determination that the user query has been received from at least the first pre-specified number of different users from at least the second pre-specified number of different geographic regions and (ii) the determination that the user query complies with the set of privacy constraints.

Determining that the input query matches the given public query can include determining that the input query is exactly the same as the public query.

Determining that the input query matches the given public query can include: determining that the input query is not exactly the same as any of the public queries in the intent lexicon; performing a phrase match analysis between the input query and the public queries stored in the intent lexicon; performing an inverse document frequency analysis on the public queries stored in the intent lexicon; and determining that the input query matches the given public query based on a combination of a first result of the phrase match analysis and a second result of the inverse document frequency analysis.

Converting the public query to the proxy phrase can include removing one or more words from the public query. Converting the public query to the proxy phrase can include rearranging words in the public query. Converting the public query to the proxy phrase can include converting the public query to the proxy query using a rewrite prompt that constrains the language model from adding information to the proxy phrase that was not included in the public query.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which text input to proxy phrase conversion can be implemented.
FIG. 2 is a block diagram illustrating the generation of proxy phrases, and the use of proxy phrases when user submitted queries are received.
FIG. 3 is a flow chart of an example process for performing text input to proxy phrase conversion.
FIG. 4 is a block diagram of an example computer.

Like reference numbers and designations in the various drawings indicate like elements.

### DETAILED DESCRIPTION

This application is related to converting text input submitted by a user into a proxy phrase that represents the text input while protecting user data. The techniques described herein facilitate privacy-preserving query analysis and content customization. As discussed in more detail throughout this document, the system uses a language model to convert public queries into proxy phrases, taking into account the original query, associated search results, query language, and a rewrite prompt. The proxy phrases are then used to represent newly received user submitted queries. In this way, there is not a direct connection between the proxy phrases, which can be shared and with which additional processing can be performed, and the actual query submitted by the user.

As used throughout this specification, the phrase "proxy phrase" refers to one or more machine-generated words that collectively represent an intent of an input phrase. In many cases, the proxy phrase for a given input phrase will differ from the given input phrase. For example, the proxy phrase can omit words that were present in the given input phrase. Words of the proxy phrase that appear in the input phrase can be in a different order than how they appeared in the given input phrase. For example, assume that the input phrase is "leather pants men fashion nova." In this example, the proxy phrase can be "men's leather pants fashion nova" because this is a more common way to represent the intent of the input phrase. The proxy phrases discussed throughout this document are generated using artificial intelligence (e.g., a language model), but proxy phrases can be generated by other machines or computing devices. Generally, a proxy phrase is stored in a database with a mapping to the input phrase used to generate the proxy phrase. Multiple mappings of proxy phrases to corresponding input phrases can be stored together to create an intent lexicon, as described in more detail below.

As used throughout this specification, the phrase "digital component" refers to a discrete unit of digital content or digital information (e.g., a video clip, audio clip, multimedia clip, gaming content, image, text, combination of image and text, bullet point, artificial intelligence output, language model output, or another unit of content or unit of combined content). A digital component can electronically be stored in a physical memory device as a single file or in a collection of files, and digital components can take the form of video files, audio files, multimedia files, image files, or text files and include advertising information, such that an advertisement is a type of digital component.

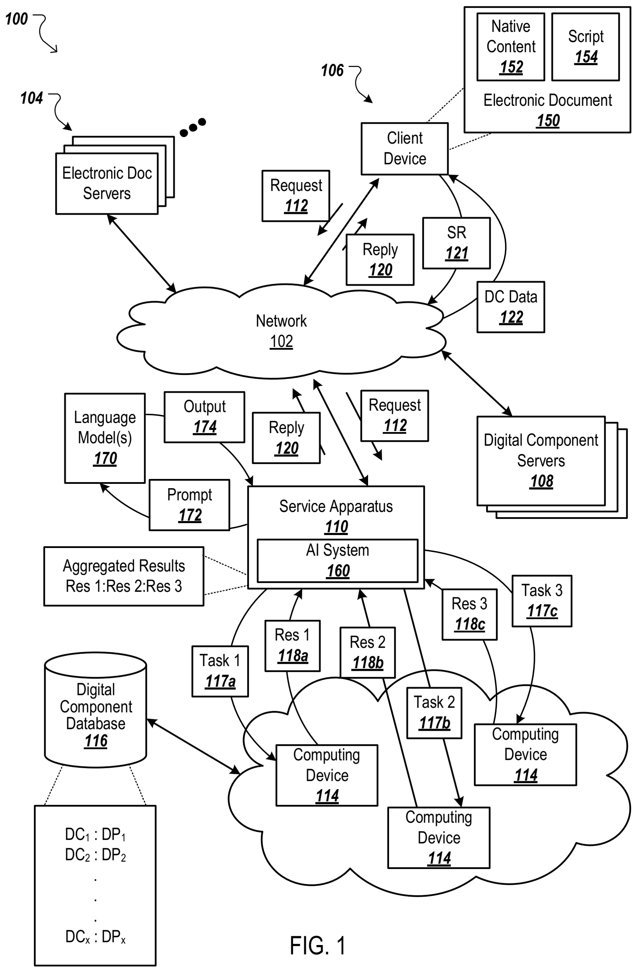

FIG. 1 is a block diagram of an example environment 100 in which text input to proxy phrase conversion can be implemented. The example environment 100 includes a network 102, such as a local area network (LAN), a wide area network (WAN), the Internet, or a combination thereof. The network 102 connects electronic document servers 104, client devices 106, digital component servers 108, and a service apparatus 110. The example environment 100 may include many different electronic document servers 104, client devices 106 (e.g., user devices), and digital component servers 108.

A client device 106 is an electronic device capable of requesting and receiving online resources over the network 102. Example client devices 106 include personal computers, gaming devices, mobile communication devices, tablet devices, digital assistant devices, augmented reality devices, virtual reality devices, wearable devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally (i.e., on the client device). Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., a digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service apparatus 110, or a particular service provided by the service apparatus 110. In these situations, the digital component script is executed by the client device 106 when the given electronic document is processed by the client device 106. Execution of the digital component script configures the client device 106 to generate a request for digital components 112 (referred to as a "component request"), which is transmitted over the network 102 to the service apparatus 110. For example, the digital component script can enable the client device 106 to generate a packetized data request including a header and payload data. The component request 112 can include event data specifying features such as a name (or network location) of a server from which the digital component is being requested, a name (or network location) of the requesting device (e.g., the client device 106), and/or information that the service apparatus 110 can use to select one or more digital components, or other content, provided in response to the request. The component request 112 is transmitted, by the client device 106, over the network 102 (e.g., a telecommunications network) to a server of the service apparatus 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service apparatus 110. Similarly, event data specifying keywords associated with the electronic document ("document keywords") or entities (e.g., people, places, or things) that are referenced by the electronic document can also be included in the component request 112 (e.g., as payload data) and provided to the service apparatus 110 to facilitate identification of digital components that are eligible for presentation with the electronic document. The event data can also include a search query that was submitted from the client device 106 to obtain a search results page.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service apparatus 110 chooses digital components (e.g., third-party content, such as video files, audio files, images, text, gaming content, augmented reality content, and combinations thereof, which can all take the form of advertising content or non-advertising content) that will be presented with the given electronic document (e.g., at a location specified by the script 154) in response to receiving the component request 112 and/or using information included in the component request 112.

In some implementations, a digital component is selected in less than a second to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the service apparatus 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC₁₋ₓ). The millions of available digital components can be indexed, for example, in a digital component database 116. Each digital component index entry can reference the corresponding digital component and/or include distribution parameters (DP₁-DPₓ) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords/topics/categories that must be matched (e.g., by electronic documents, document keywords, or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service apparatus 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service apparatus 110 aggregates the results 118a-118c received from the set of multiple computing devices 114 and uses information associated with the aggregated results to select one or more digital components that will be provided in response to the request 112. For example, the service apparatus 110 can select a set of winning digital components (one or more digital components) based on the outcome of one or more content evaluation processes, as discussed below. In turn, the service apparatus 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106.

In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., beside, the native content 152 of the electronic document 150. In some implementations, the digital component is overlayed over (or adjacent to) a portion of the native content 152 of the electronic document 150, and the service apparatus 110 can specify the presentation location within the electronic document 150 in the reply 120. For example, when the native content 152 includes video content, the service apparatus 110 can specify a location or object within the scene depicted in the video content over which the digital component is to be presented.

The service apparatus 110 can also include an artificial intelligence system 160 configured to autonomously generate digital components, either prior to a request 112 (e.g., offline) and/or in response to a request 112 (e.g., online or real-time). The artificial intelligence ("AI") system 160 can collect online content about a specific entity (e.g., digital component provider or another entity) and summarize the collected online content using one or more language models 170, which can include large language models of various sizes. Note that the language model 170 is depicted as being separate from the service apparatus 110 and the AI system 160, but the language model 170 can be integrated into the service apparatus 110 and/or the AI system 160. The AI system 160 can also perform other operations, as discussed in more detail later.

A large language model ("LLM"), which is also referred to simply as a language model, is a model trained to generate and understand human language. LLMs are trained on massive datasets of text and code, and they can be used for a variety of tasks. For example, LLMs can be trained to translate text from one language to another; summarize text, such as web site content, search results, news articles, or research papers; answer questions about text, such as "What is the capital of Georgia?"; create chatbots that can have conversations with humans; and generate creative text, such as poems, stories, recommendations, and code.

The category of "large language models" can vary in size. Larger models generally use a larger number of parameters than smaller models, which enables the larger models to complete a wider range of tasks and generate more accurate responses to input. For example, because of the larger number of parameters, the larger language models are generally configured to understand the context of the input more effectively, and to generate more detailed responses than smaller models that use a smaller number of parameters.

The language model 170 can be any appropriate language model that receives an input sequence made up of text tokens selected from a vocabulary and auto-regressively generates an output sequence made up of text tokens from the vocabulary. For example, the language model 170 can be a Transformer-based language model neural network or a recurrent neural network-based language model.

In some situations, the language model 170 can be referred to as an auto-regressive neural network when the neural network used to implement the language model 170 auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the neural network of the language model 170 can process the current input sequence to generate a score distribution (e.g., a probability distribution) that assigns a respective score, e.g., a respective probability, to each token in the vocabulary of tokens. The neural network of the language model 170 can then select, as the particular token, a token from the vocabulary using the score distribution. For example, the neural network of the language model 170 can greedily select the highest-scoring token or can sample, e.g., using nucleus sampling or another sampling technique, a token from the distribution.

As a particular example, the language model 170 can be an auto-regressive Transformer-based neural network that includes (i) a plurality of attention blocks that each apply a self-attention operation and (ii) an output subnetwork that processes an output of the last attention block to generate the score distribution.

The language model 170 can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

Generally, however, the Transformer-based neural network includes a sequence of attention blocks, and, during the processing of a given input sequence, each attention block in the sequence receives a respective input hidden state for each input token in the given input sequence. The attention block then updates each of the hidden states at least in part by applying self-attention to generate a respective output hidden state for each of the input tokens. The input hidden states for the first attention block are embeddings of the input tokens in the input sequence and the input hidden states for each subsequent attention block are the output hidden states generated by the preceding attention block.

In this example, the output subnetwork processes the output hidden state generated by the last attention block in the sequence for the last input token in the input sequence to generate the score distribution.

Generally, because the language model is auto-regressive, the service apparatus 110 can use the same language model 170 to generate multiple different candidate output sequences in response to the same request, e.g., by using beam search decoding from score distributions generated by the language model 170, using a Sample-and-Rank decoding strategy, by using different random seeds for the pseudo-random number generator that's used in sampling for different runs through the language model 170 or using another decoding strategy that leverages the auto-regressive nature of the language model.

In some implementations, the language model 170 is pre-trained, i.e., trained on a language modeling task that does not require providing evidence in response to user questions, and the service apparatus 110 (e.g., using AI system 160) causes the language model 170 to generate output sequences according to the pre-determined syntax through natural language prompts in the input sequence.

For example, the service apparatus 110 (e.g., AI system 160), or a separate training system, pre-trains the language model 170 (e.g., the neural network) on a language modeling task, e.g., a task that requires predicting, given a current sequence of text tokens, the next token that follows the current sequence in the training data. As a particular example, the language model 170 can be pre-trained on a maximum-likelihood objective on a large dataset of text, e.g., text that is publicly available from the Internet or another text corpus.

The combination of devices/apparatus discussed above can be used to transform user submitted queries (e.g., input queries) to proxy phrases that represent the input query in a privacy preserving way, while providing more granular analysis than that provided by existing systems, avoiding redundancies found in current systems, and enabling personalization that is not possible in current systems. More specifically, because user queries are generally cannot be used for analysis or personalization without compromising user data protections, most systems currently use content provider specified distribution keywords that are matched by a user submitted query for analysis and personalization. However, these human-specified distribution keywords and the matching technologies used for determining matches between a user submitted query and a human-specified distribution keyword result in poor coverage of topics corresponding to user submitted queries, redundancies when multiple distribution keywords are related to the same topic and can lead to a lack of granularity when "broad match" settings are used for determining whether a user submitted query matches a distribution keyword.

Broad match distribution keywords are distribution keywords that are matched by user submitted queries (i.e., one or more words) that include one or more same words as the broad match distribution keywords. For example, the broad match distribution keyword "red flower," may be matched by the phrases "wild flower," "flower child," or "flowers that are red," because each of these phrases include the word "flower," which is included in the broad match distribution keyword. Broad match distribution keywords can also be matched by user submitted queries that include synonyms or related terms "pots for flowering plants" or "watering cans for plants." In each of these cases, the distribution keyword "red flower" would be used by existing systems to represent each of the example user input queries referenced above. As such, there is a loss of granularity because the context of each of the user submitted queries is lost. Furthermore, when there is overlap between broad match distribution keywords, this results in distribution keyword redundancies that can result in analysis errors because multiple distribution keywords represent the same types of user submitted queries.

To address the shortcomings of the current systems, the present system invokes a new paradigm of how to represent user submitted queries in a way that provides better granularity by maintaining the context of the user submitted query, enables more precise personalization, and corrects errors in the analysis of existing systems by removing redundancies that occur when using human-specified distribution keywords to represent user submitted queries. The new paradigm represents the user submitted queries with proxy phrases that are AI generated and represent the meaning of the user submitted query while still ensuring the protection of user specific data, as discussed in more detail below. The new paradigm can be implemented by the service apparatus 110 and language model 170.

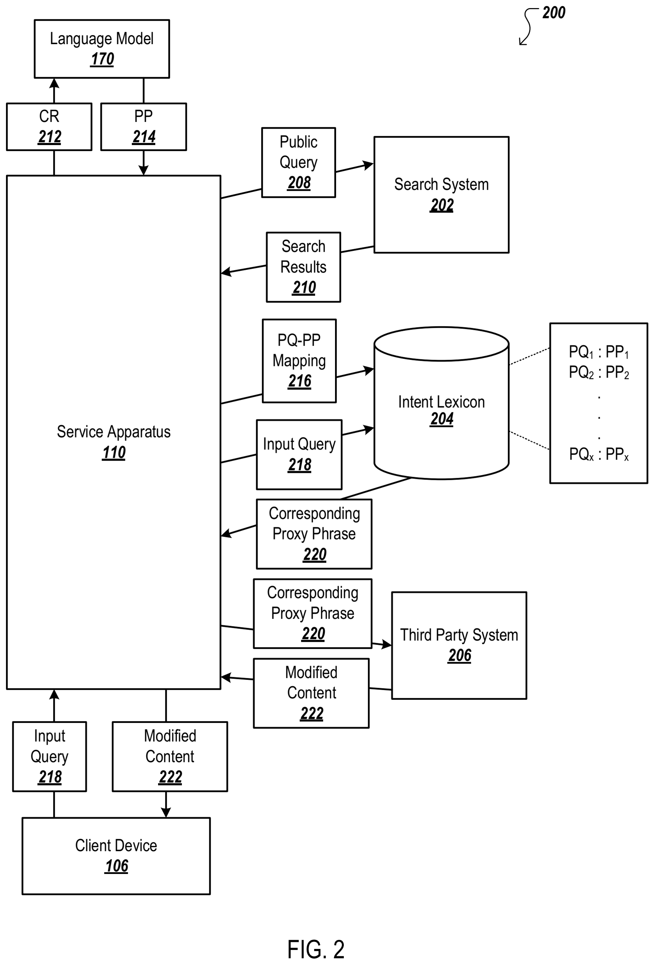

FIG. 2 is a block diagram 200 illustrating the generation of proxy phrases, and the use of proxy phrases when user submitted queries are received. The block diagram 200 includes the service apparatus 110, the language model 170, and the client device 106, each of which were discussed above. The block diagram 200 also includes a search system 202, an intent lexicon 204 (e.g., stored in a memory structure), and a third part system 206 (e.g., a computing system).

The search system 202 is a computing system that accepts queries (e.g., a public query 208) as inputs and returns search results 210 as output. The search results can include a title (e.g., of a web page) and a snippet of text representing the content found at a network location to which the search results links (e.g., by way of a uniform resource locator). The third-party system 206 is a system that is located in a different second level domain than the service apparatus 110. For example, assume that the service apparatus 110 is in the second level domain example[.]com. In this example, the third-party system would be located in a second level domain other than (e.g., that is not) example[.]com. For instance, the third-party system could be in examplecontentprovider[.]com.

As discussed in more detail below, the proxy phrases are generated by the language model 170 using a set of public queries (e.g., queries that have been submitted by at least a specified number of users from at least a specified number of geographic regions). To facilitate creation of a proxy phrase, the service apparatus 110 can obtain a public query 208 and submit the public query to the search system 202.

In some implementations, a query qualifies as a public query when (i) the query has been received from at least a first pre-specified number of different users from at least a second pre-specified number of different geographic regions and (ii) the query complies with a set of privacy constraints. For example, the first number of different users can be set to at least 50 users, at least 200 users, or another appropriate number of users to comply with user data protection requirements. The second number of different geographic regions can be set to 10 geographic regions, 20 geographic regions, or another appropriate number of geographic regions to comply with user data protection requirements. A geographic region could be defined by a postal code, city name, state name, or specified latitude/longitude coordinates. The public queries 208 can be pre-selected and obtained from a database or classified as public queries by the service apparatus 110.

The search system 202 returns search results 210 to the service apparatus 110 in response to receiving the public query 208 from the service apparatus 110. The service apparatus 110 can create a conversion request (CR) 212 that is submitted to the language model 170. The conversion request can include the public query 208, the search results 210, a language of the public query (e.g., English, Spanish, etc.), and a rewrite prompt. In some implementations, the rewrite prompt instructs the language model to convert the public query into a succinct variant that retains aspects of the core item/topic referenced by the public query, removes information that does not represent the core item/topic, and maintains the meaning and intent of the public query.

Using the CR 212, the language model 170 generates a new proxy phrase 214 and outputs the proxy phrase 214. The proxy phrase 214 (e.g., the text output by the language model 170) represents the core item/topic of the public query 208 and omits information that is tangential to the core item/topic of the public query 208. For example, assume that the public query 208 is "boston celtics men's shirt reviews." In this example, the proxy phrase 214 output by the language model 170 may be "Men's Boston Celtics Shirt," which maintains the core item of the public query (i.e., Men's Boston Celtics Shirt") in a succinct manner, and omits the word "reviews" which does not represent the core item/topic of the public query.

As discussed above, the CR 212 includes the search results 210 that were obtained from the search system 202 using the public query 208. By providing the search results 210 to the language model 170 with the public query 208, the language model 170 is better able to determine the context of the public query 208 and the intent (e.g., desired information or objective) of a user that submitted the public query 208. For example, assume that the public query was "jaguar pace range information," which refers to the automobile Jaguar F-Pace or Jaguar E-Pace, but could be misconstrued as a search query for an animal's speed. In this example, if the language model 170 is provided the public query "Jaguar pace" without any additional information, the language model 170 would not be able to reliably determine that the intent of the public query is to obtain information about the automobile rather than the animal. However, the top search results for the public query "jaguar pace range information" all include information about the Jaguar F-Pace or Jaguar E-Pace, which the language model 170 can use to determine the context/intent of the public query and generate a proxy phrase that is consistent with the intent to obtain information about a Jaguar automobile. As an example, the language model 170 could capitalize the J in jaguar and Pace, thereby making these words proper nouns, thereby representing the Jaguar Pace model of automobile. The language model 170 could also include the term automobile, resulting in the proxy phrase "Jaguar Pace Automobile" being output by the language model 170, and obtained by the service apparatus 110 as a representative phrase for the public query "jaguar pace range information". This proxy phrase 214 retains the core item/topic of the public query 208, which was a Jaguar automobile, without losing the granularity related to the "Pace" model of Jaguar.

The service apparatus 110 receives the proxy phrase 214 that was generated for the public query 208 and generates a mapping between the public query 208 and the corresponding proxy phrase 214 that was generated for the public query 208. In this way, the service apparatus 110 can link the relationship between the public query 208 and the proxy phrase 214. The mapping can be referred to as a public query to proxy phrase (PQ-PP) mapping 216.

The service apparatus 110 can store the PQ-PP mapping 216 in the intent lexicon 204 with other PQ-PP mappings. In some implementations, the intent lexicon 204 is a data structure (e.g., in a physical memory device) that includes a corpus of mappings between public queries and their corresponding proxy phrase that was generated by the language model 170. As discussed in more detail below, this enables proxy phrases to be searched using the public queries as the search key. In this way, proxy phrases can be identified by way of a search function when a user submitted query is received, rather than having to utilize the computing resources of the language model 170 at the time a user submitted query is received. This also reduces the latency required for the service apparatus 110 to respond to a user submitted query because a search function is orders of magnitude faster than generating an output using a generative language model.

Once the intent lexicon 204 is populated with the PQ-PP mappings 216, the service apparatus 110 can receive an input query 218 (e.g., a user submitted query) from the client device 106 and use the input query 218 to search for a matching public query in the intent lexicon 204. In some implementations, a match between the input query 218 and the stored public query 208 of a PQ-PP mapping 216 can be determined to exist when the input query 218 exactly matches the public query 208. For example, assume that the input query 218 is "jaguar pace range information". In this example, the input query 218 would exactly match the public query 208 "jaguar pace range information" discussed above. As such, the service apparatus 110 can select "Jaguar Pace Automobile" as the corresponding proxy phrase 220 for "jaguar pace range information," which was obtained from the client device 106 as the input query 218.

In some implementations, an exact match is not required between an input query 218 and a stored public query 208 in order to determine that a match exists. In other words, a less than exact match can be deemed to be a match between an input query 218 and a stored public query 208. For example, phrase matching (or broad matching) techniques can be used to determine whether a match exists between the input query 218 and the stored public query 208. An example of a phrase matching techniques allows for a match to be found between phrases in which words of the phrases match occur in a same order (or in different orders). For example, the input query 218 can phrase match a stored public query 208 when the input query 218 includes additional words that are not included in the stored public query 208. For example, if "red rose" is stored as the public query 208, the input queries 218 "red rose" and "long stem red rose" will match the public query "red rose" because each of the input queries 218 include the words "red" and "rose" in the order specified by the phrase match keyword. In some implementations, phrase matching does not require the words of the phrase to occur in the same order, such that when "rose red" or "pretty rose red" are received as the input query 218, the service apparatus 110 can determine that these input queries 218 match the stored public query 208 "red rose" and return the corresponding proxy phrase 220 for the public query 208 "red rose." Other matching techniques can be used as appropriate.

In some implementations, the matching techniques can be further relaxed when a determination is made that the input query 218 fails to exactly match a stored public query 208, and also fails to phrase match any stored public query 208. For example, when no match is found using the two techniques discussed above (e.g., exact and phrase matching), the service apparatus 110 can invoke an expanded match technique to search for a match between the input query 218 and a stored public query 208.

Expanded match techniques allow for the determination that a match exists when the input query 218 includes phrases (e.g., one or more words) that have been determined to be relevant to a stored public query 208. For example, an expanded match of an input query 218 to a public query 208 can be determined to exist when the input query 218 includes stubs, synonyms, various alternative forms of the stored public query 208 (e.g., past tense, gerunds, future tense), and/or terms that are relevant to a same topic or concept as the stored public query 208 (e.g., based on term clustering techniques). As such, an expanded match can be determined to exist even when the input query 218 does not include any of the same words as the stored public query 208. For example, the input query 218 "crimson flower" can match the stored public query 208 "long stem rose," assuming the phrase "crimson flower," has been determined to be relevant to the phrase "long stem rose" (e.g., based on a distance between the phrases in a multi-dimensional semantic space.

In some implementations, an input query 218 may match more than one stored public query 208 in the intent lexicon 204, for example, when expanded match techniques are used to determine that a match exists. In these situations, the service apparatus 110 can select the corresponding proxy query 220 for the "best" matching public query 208 for the input query 218. The service apparatus can determine the "best" matching public query 208 in a number of ways. One example technique for determining the "best" matching public query 208 uses a combination of evaluation techniques. For example, the service apparatus 110 can use the scores from phrase match evaluations of the input query 218 and the candidate matching public queries 208 as well as an inverse document frequency score to determine which of the candidate matching queries 208.

The scores from the phrase match evaluations will provide, for each evaluation of the input query 218 and each of the candidate matching public queries 208, a value representing how well the input query 218 phrase matches the candidate matching public query 208. For example, the output of the phrase match evaluation can be a number form 0.0-1.0, with a score of 0.0 indicating no level of phrase match between the input query 218 and the candidate public query 208, and a score of 1.0 indicating an exact phrase match.

The scores from the inverse document frequency (IDF) evaluation will provide a higher score to higher candidate public queries 208 having more rare terms across a set of documents (e.g., web pages). For example, common terms (e.g., "the," "is") appear in many documents and are less informative, so they receive a lower IDF score, while more rare terms will receive a higher IDF score because they are more informative of the intent/core item of the public query 208. In some implementations, the IDF score for each candidate matching public query 208 can be post-processed with normalization techniques (e.g., min-max scaling or L2 normalization) to fit a 0-1 range for consistency or model requirements. For example, to be on a same scale as the phrase match evaluations.

The phrase match score and the IDF score for each candidate matching public query 208 can be combined in various ways to arrive at a match score. For example, the phrase match score and the IDF score can be added, if on a same normalized scale, such as 0.0-1.0. Alternatively, the IDF score, and phrase match score can be multiplied together, the phrase match score can be used as an exponential for the IDF score, or an appropriate equation that includes both of the phrase match score and the IDF score as terms of the equation can be used. The result of combining the phrase match score and the IDF score should result in a value that enables direct comparison of the candidate matching public queries 208 as a match for the input query 218. As such, the service apparatus 110 can use the result to rank and select the highest scoring candidate matching public query 208 as a match to the input query 218. In turn, the corresponding proxy phrase 220 for the public query 208 that was determined to match the input query 218 can be selected to represent the input query 218.

The service apparatus 110 can use the corresponding proxy phrase 220 that was selected using the input query 218 as a representation of the input query 218 for further processing, analysis, and personalization (e.g., content personalization) rather than using the input query 218. In this way, personal information that may be contained in the input query 218 will not be used, since it is not included in the corresponding proxy phrase 220, by design. That is, each of the proxy phrases generated by the language model 170 can be analyzed to ensure that they do not contain any personal information prior to being mapped to a public query 208 and/or stored in the intent lexicon 204. As such, the conversion of the input query 218 to corresponding proxy phrase 220 ensures that user data protection requirements are fulfilled, while allowing more granular use of the intent of the input query 218, as previously discussed.

In some implementations, the service apparatus provides the corresponding proxy phrase 220 (referred to as simply proxy phrase going forward) to the third-party system 206 for use as desired by the third-party system 206. For example, the third-party system can use the proxy phrase 220 to generate modified content 222 based on the proxy phrase 220. The modified content 222 can take many forms. For example, the modified content 222 can be a modified uniform resource locator (URL) that is inserted into a digital component provided to the client device 106. More specifically, the third-party system 206 can specify that the proxy phrase 220 is used to populate a URL at a location of a specified placeholder/parameter in the URL. When the digital component is served and/or interacted with, the URL to which the digital component redirects the client device can be modified by inserting the proxy phrase 220 into the URL (e.g., at the location of the placeholder/parameter), resulting in modified content 222. In this way, the URL to which a user is directed in response to interaction with the digital component can be personalized using the proxy phrase 220 representing the input query 218 rather than the input query 218 itself. This can facilitate redirection of the client device 106 to a relevant URL and/or tracking the proxy phrase 220 that led a user to content at a given URL.

Similarly, the third-party system 206 can modify native content of a landing page to which a user is redirected in response to interaction with a digital component delivered to the client device responsive to the input query 218. For example, the third-party system 206 can use the proxy phrase 220 to select content to populate portions of the landing page that is presented at the client device following interaction with a digital component delivered to the client device 106 responsive to user submission of the input query 218. In this way, the third-party system 206 can personalize the content of the landing page using the proxy phrase 220, which represents the input query 218, without the risk of using personal information or violating user data protections that may occur if the input query 218 itself were used to perform the personalization.

In some implementations, the proxy phrase 220 is delivered to an account interface of the third-party system 206. For example, if the third-party system 206 maintains an account within the environment of the service apparatus 110, the proxy phrase 220 can be transmitted/delivered to the account of the third-party system 206 within the environment of the service apparatus 110. In this example, logic invoked through the account of the third-party system 206 can use the proxy phrase 220 to generate the modified content 222 in a manner similar to that discussed above.

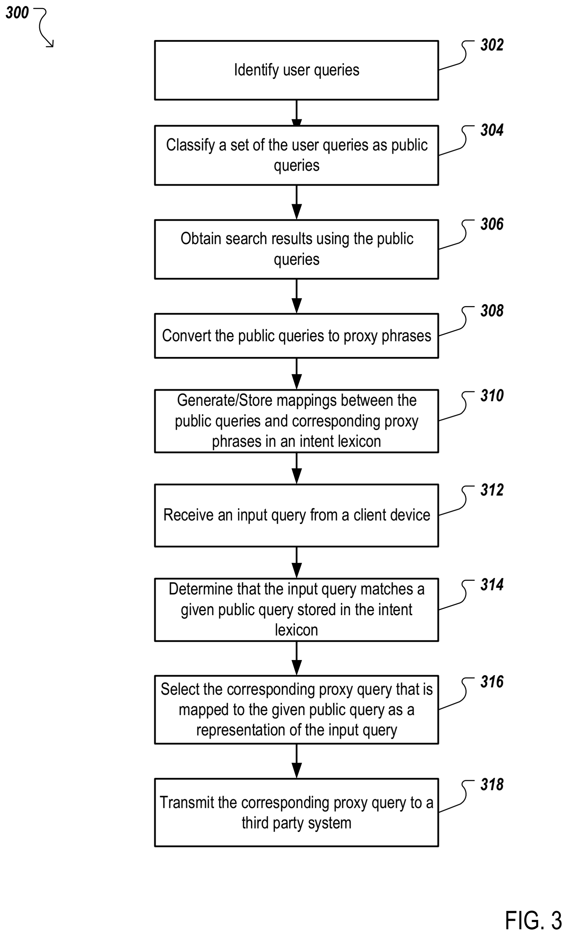

FIG. 3 is a flow chart of an example process 300 for performing text input to proxy phrase conversion. Operations of the process 300 can be performed, for example, by the service apparatus 110 of FIG. 1 (e.g., including the AI system 160 and/or language model 170), or another data processing apparatus. The operations of the process 300 can also be implemented as instructions stored on a computer readable medium, which can be non-transitory. Execution of the instructions, by one or more data processing apparatus, cause the one or more data processing apparatus to perform operations of the process 300.

A set of (e.g., one or more) user queries are identified (302). In some implementations, the user queries can be a set of queries that have been received by the service apparatus 110 of FIG. 1, a search system, or another computer system. For example, the user queries can be search queries that have been submitted by all (or less than all) users of a search system. In some implementations, the identification of the search queries includes identifying only those user queries that were submitted at least a specified number of times. In some implementations, the set of user queries identified only includes a top X (e.g., 1 million or some other appropriate number of) most frequently submitted user queries.

A set of the user queries are classified as public queries (304). To protect user data, the system may apply filters and thresholds to determine which user queries can be used to generate proxy phrases. For example, queries that meet certain privacy criteria, such as being searched by a minimum number of unique users from diverse geographic regions, may be considered public queries.

In some implementations, the classification of a given user query as a public query is performed based on the given user query having been submitted by at least a first pre-specified number of different users from at least a second pre-specified number of different geographic locations. For example, as previously discussed, the first number of different users can be set to at least 50 users, at least 200 users, or another appropriate number of users to comply with user data protection requirements. The second number of different geographic regions can be set to 10 geographic regions, 20 geographic regions, or another appropriate number of geographic regions to comply with user data protection requirements. A geographic region could be defined by a postal code, city name, state name, or specified latitude/longitude coordinates.

As part of the classification process, the number of different users from which the given query has been received can be determined. In some implementations, a counter can be incremented each time that the given query is received from a user who has not submitted the given query before. When considering whether the given query qualifies as a public query, the counter can be read, and if the value of the counter is greater than a minimum required number of unique users, the query can be considered as having been received from at least the first pre-specified number of different users. Other ways of tracking and confirming the number of different users who have submitted the given query can be used.

The classification process also includes the determination of whether the given query has been received from at least the second pre-specified number of different geographic regions. In some implementations, a counter can be incremented each time that the given query is received from a client device in a geographic region from which the given query has not yet been received. When considering whether the given query qualifies as a public query, the counter can be read, and if the value of the counter is greater than a minimum required number of geographic regions, the query can be considered as having been received from at least the second pre-specified number of geographic regions. Other ways of tracking and confirming the number of different geographic regions from which the given query has been received can be used.

The classification of the given query can also include a determination that the given query complies with a set of privacy constraints. These constraints may be designed to protect user data and prevent the disclosure of certain personal information (e.g., addresses, etc.). The system may analyze the content of the given query and any related metadata to ensure compliance with the privacy constraints. In some situations, the given query can be filtered out of consideration as a public query if the given query includes one or more of a residential address or information included on a blacklist of information that is ineligible for inclusion in queries that are classified as public queries (e.g., financial account information, etc.).

When it is determined that (i) the user query has been received from at least the first pre-specified number of different users from at least the second pre-specified number of different geographic regions and (ii) the determination that the user query complies with the set of privacy constraints, the given query is classified as a public query. The classification of other queries as public queries can be performed in a similar fashion, such that a set of public queries that have been received from multiple different users can be obtained. In some implementations, the set of public queries can be pre-generated by a separate processing system and stored in a database from which the set of public queries can be obtained without having to perform the classification above. Rather, obtaining the public queries would entail sending a request to the system maintaining the set of public queries, and receiving (or gaining access to) the set of public queries in response to the request.

Search results are obtained using the public queries (306). As discussed above with reference to FIG. 2, the search results for a given public query can be obtained by submitting the given public query to a search system and receiving the search results generated by the search system using the given public query.

The public queries are converted to proxy phrases (308). In some implementations, the conversation can be performed using a language model and based on based on the public query, the search results, a language of the query, and a rewrite prompt that are input to the language model. For example, as discussed above, each of the public query, the search results, the language of the query, and the rewrite prompt that are input to the language model can be submitted as input to the language model, and the proxy phrase can be received as output from the language model.

The language of the query is the language in which the public query is written. For example, the language can be English, Spanish, Greek, Italian, or another language in which the query is written. The language of the public query can be recorded when the public query is received, for example, based on client device language metadata that is included with the search query when received from a client device. As such, the language of the query can be directly read from the metadata included in the submission of the public query by a client device.

This rewrite prompt is a set of instructions that affect the output of the language model. For example, the rewrite prompt can instruct the language model to convert the public query into a succinct variant that retains aspects of the core item/topic referenced by the public query, removes information that does not represent the core item/topic, and maintains the meaning and intent of the public query. In some implementations, the rewrite prompt may be designed/formatted to constrain the language model from adding information to the proxy phrase that was not included in the public query. For example, the rewrite prompt can include instructions that require the language model to not add any information that was not already included or present in the public query. By imposing constraints, the system may ensure that the generated proxy phrase for a given public query remains faithful to the original query intent without introducing extraneous or potentially sensitive information.

In some cases, the system may remove one or more words from the public query as part of generating the proxy phrase. For example, assume that the public query is "best oven for neapolitan pizza." In this example, the language model may output the proxy phrase "oven for neapoloitan pizza," by removing the word "best," which is not directly related to the core item/topic of the public query. Similarly, the public query "Diy hot chocolate bar ideas for wedding reception" may be converted to the proxy phrase "hot chocolate bar for wedding reception," which maintains the core intent of the public query while also removing extraneous words that are not directed to the core intent. The word removal can also include removal of addresses, names, and other information that might compromise user data protections. This word removal process may help in generalizing the query or removing potentially identifying information while preserving the core intent.

The system may also rearrange words in the public query during the conversion of the public query to the proxy phrase. This rearrangement may allow for more natural or concise expressions of the query intent, potentially making the proxy phrase more suitable for use in a wide array of contexts. For example, the public query "boston celtics men's shirt," may be converted to the proxy phrase "men's boston celtics shirt," which is a more natural expression of the public query intent. By employing these various techniques, the system may effectively convert public queries into proxy phrases that maintain the essential meaning of the public queries while adhering to privacy constraints.

Mappings between the public queries and corresponding proxy phrases are generated and stored in an intent lexicon (310). In some implementations, the system generates a mapping (e.g., link, association, or another logical relationship) indicating that a given public query was used to generate a given corresponding proxy phrase. In this way, the given public query can be used as a search key for identifying the given corresponding proxy phrase that represents the given public query. In some cases, the intent lexicon may include additional metadata associated with each mapping. This metadata may include information such as the timestamp of when the mapping was created, the frequency of query occurrence, or other relevant attributes that may be useful for analysis or decision-making processes. When the mapping is generated, the system can store the mapping in the intent lexicon with other mappings between other public queries and other proxy phrases that were generated using the other public queries (e.g., by the language model).

In some implementations, the set of public queries will change over time. For example, new queries that were not previously categorized as public queries at one point in time may later qualify as public queries. As such, the operations previously discussed can be performed periodically (e.g., daily) to maintain an up to date of public query to proxy phrase mappings.

The system may implement measures to ensure the integrity and security of the intent lexicon. These measures may include encryption of stored data, access controls to restrict unauthorized modifications, and backup mechanisms to prevent data loss. By maintaining a secure and well-organized intent lexicon, the system may provide a reliable foundation for privacy-preserving query processing and reporting in advertising contexts.

After the intent lexicon has been created (e.g., including one or more public query to proxy phrase mappings), an input query is received from a client device (312). As previously discussed, the input query can be a user submitted search query, or another user submitted query.

A determination is made that the input query matches a given public query stored in the intent lexicon (314). In some implementations, the match between the input query and the given public query can be determined to exist when the input query is exactly the same as the public query.

In situations where a determination is made that the input query is not an exact match with (e.g., not exactly the same as) any of the public queries stored in the intent lexicon, a phrase match analysis between the input query and the public queries stored in the intent lexicon. As part of the phrase match analysis, the system may break down the input query and the public queries into phrases or n-grams. The system may then compare these phrases to identify similarities and calculate a phrase match score based on the number of shared phrases or the degree of overlap between the input query and each public query. As the similarities between the phrases increases, so does the phrase match score.

As previously discussed, the result of the phrase match analysis can be a value representing how well the input query qualifies as a phrase match to a stored public query. In addition to the phrase match analysis, an inverse document frequency (IDF) analysis of the public queries stored in the intent lexicon can be performed. As part of the IDF analysis, the system can assign weights to words or phrases based on their frequency of occurrence across the entire set of public queries in the intent lexicon (or across another set of documents, such as the Internet). Words or phrases that appear less frequently may be given higher weights, as they may be more indicative of specific query intents. As previously discussed, the IDF analysis results in a value indicative of how unique each of the public queries is. As previously discussed, the system can use a combination of the result (e.g., a first result) of the phrase match analysis and the result (e.g., a second result) of the IDF analysis to determine that the input query matches one of the public queries stored in the intent lexicon. For example, the public query having the highest score (e.g., based on a mathematical combination of the result of the phrase match analysis and the result of the IDF analysis), can be deemed the best match to the input query.

Note that the use of the result of the phrase match analysis and the result of the IDF analysis can be used in any situation where an exact match between the input query and a public query is not found. For example, when the input query qualifies as a phrase match to two or more public queries, the results of the phrase match analysis and IDF analysis can be used to pick one of the two public queries as the matching query for the input query. Similarly, if the previously discussed expanded match technique is used to identify a set of two or more public queries that are candidate matches for the input query, the results of the phrase match analysis and IDF analysis can be used to pick one of the two or more public queries as the matching query for the input query.

In some implementations, the system may apply additional filters or constraints to the matching process. For example, the system may consider the language of the input query and only attempt to match the input query with public queries in the same language. The system may also take into account contextual information, such as the user's geographic location or search history, to refine the matching process and identify the most relevant public query.

A corresponding proxy query is selected as a representation of the input query (316). In some implementations, the corresponding proxy query that is selected is mapped to the given public query that matches the input query. In other words, in response to the determination that a given public query from the intent lexicon is a matching query for the input query, the system can select the corresponding proxy phrase that is mapped to that given public query as the proxy phrase that will be used to represent the input query.

The corresponding proxy phrase is transmitted to a third-party system (318). As previously discussed, the proxy phrase can be used by the third-party system to facilitate the creation of modified content.

By transmitting the proxy phrase to the third-party system instead of the original input query, the system may offer several privacy benefits. First, the proxy phrase may be a more generalized or anonymized version of the original query, potentially removing or obfuscating sensitive information that may have been present in the input query.

Additionally, the use of proxy phrases may help prevent the accumulation of user-specific search histories or behavioral profiles by third-party systems. Since the transmitted proxy phrases are synthetic representations rather than actual user inputs, they may not be directly linked to users or their search patterns. In some cases, the system may apply additional privacy-preserving techniques when transmitting proxy phrases to third-party systems. For example, the system may implement rate limiting or add noise to the frequency of transmitted proxy phrases to further protect user privacy and prevent potential re-identification attempts.

The transmission of proxy phrases to third-party systems may also enable these external entities to benefit from aggregated search data without compromising individual user privacy. This approach may allow content providers, for instance, to gain insights into popular search trends and optimize their distribution keywords accordingly, while respecting user privacy and adhering to user data protection regulations. As such, the system may strike a balance between providing valuable search term insights and maintaining robust privacy protections for users in the context of online content distribution and analytics.

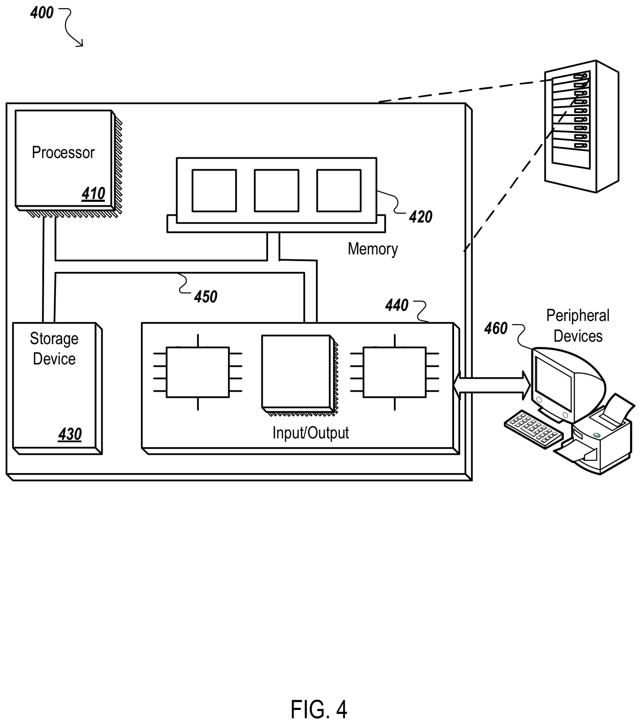

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

This document refers to a service apparatus. As used herein, a service apparatus is one or more data processing apparatus that perform operations to facilitate the distribution of content over a network. The service apparatus is depicted as a single block in block diagrams. However, while the service apparatus could be a single device or single set of devices, this disclosure contemplates that the service apparatus could also be a group of devices, or even multiple different systems that communicate in order to provide various content to client devices. For example, the service apparatus could encompass one or more of a search system, a video streaming service, an audio streaming service, an email service, a navigation service, an advertising service, a gaming service, or any other service.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read Only Memory), EEPROM (Electrically Erasable Programmable Read Only Memory) and flash memory devices; magnetic disks, e.g., internal hard disks or removable disks; magneto-optical disks; and CD-ROM (Compact Disc Read Only Memory) and DVD- Read Only Memory (Digital Video Disk Read Only Memory) disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
obtaining, by one or more computing devices, a public query that has been received from multiple different users;
obtaining, by the one or more computing devices, search results for the public query;
converting, by the one or more computing devices and using a language model, the public query to a proxy phrase based on the public query, the search results, a language, and a rewrite prompt that are input to the language model;
generating and storing, by the one or more computing devices, a mapping between the public query and the proxy phrase in an intent lexicon with other mappings between other public queries and other proxy phrases that were generated by the language model;
receiving, by the one or more computing devices and from a client device, an input query;
determining, by the one or more computing devices, that the input query matches a given public query stored in the intent lexicon;
selecting, by the one or more computing devices, a corresponding proxy phrase that is mapped to the given public query as a representation of the input query based on the determination that the input query matches the given public query; and
transmitting, by the one or more computing devices, the corresponding proxy phrase to a third-party system as a representation of the input query.

2. The method of claim 1, further comprising:
identifying a user query;
determining that the user query has been received from at least a first pre-specified number of different users from at least a second pre-specified number of different geographic regions;
determining that the user query complies with a set of privacy constraints; and
classifying the user query as the public query based on (i) the determination that the user query has been received from at least the first pre-specified number of different users from at least the second pre-specified number of different geographic regions and (ii) the determination that the user query complies with the set of privacy constraints.

3. The method of claim 1, wherein determining that the input query matches the given public query comprises determining that the input query is exactly the same as the public query.

4. The method of claim 1, wherein determining that the input query matches the given public query comprises:
determining that the input query is not exactly the same as any of the public queries in the intent lexicon;
performing a phrase match analysis between the input query and the public queries stored in the intent lexicon;
performing an inverse document frequency analysis on the public queries stored in the intent lexicon; and
determining that the input query matches the given public query based on a combination of a first result of the phrase match analysis and a second result of the inverse document frequency analysis.

5. The method of claim 1, wherein converting the public query to the proxy phrase comprises removing one or more words from the public query.

6. The method of claim 1, wherein converting the public query to the proxy phrase comprises rearranging words in the public query.

7. The method of claim 1, wherein converting the public query to the proxy phrase comprises converting the public query to the proxy query using a rewrite prompt that constrains the language model from adding information to the proxy phrase that was not included in the public query.

8. A system comprising:
one or more memory devices; and
one or more computing devices configured to interface with the one or more memory devices and execute instructions that cause the artificial intelligence system to perform operations comprising a method according to any preceding claim.

9. A non-transitory computer readable medium storing instructions that, upon execution by one or more data processing apparatus, cause the one or more data processing apparatus to perform operations comprising a method according to any preceding claim.
